# EUROPÄISCHE PATENTANMELDUNG

(11) **EP 1 306 487 A1**
(43) Veröffentlichungstag der Anmeldung: **02.05.2003**
(21) Anmeldenummer: 02018448.7
(22) Anmeldetag: 16.08.2002
(51) Int. Cl.: E01C 21/00, A01B 49/06

(54) **Streuer und Mischer zur Bodenbehandlung**

(30) Priorität: 31.08.2001 DE 20114300 U
(71) Anmelder: Hermann Kirchner GmbH & Co. KG, 36251 Bad Hersfeld (DE)
(72) Erfinder: Dietrich Willi, 36251 Bad Hersfeld (DE)
(74) Vertreter: Weber, Dieter, Dr.

(57) **Zusammenfassung**

Die vorliegende Erfindung betrifft ein Einstreumischfahrzeug zum Verteilen und gleichzeitigen Einmischen von Bindemitteln, wie z.B. Kalk oder Zement, zur Erzielung einer Bodenverbesserung oder Bodenstabilisierung, mit einem Fahrwerk (1), welches vorzugsweise eine Vorder- und eine Hinterachse (3, 4) aufweist, und mit einem Materialvorratsbehälter (5) sowie einer Dosiereinheit (6) zum Verteilen des Bindemittels. Um eine kostengünstige Maschine bereitzustellen, die umweltschonend, d.h. staubfrei und ressourcenschonend sowie mit einem Minimum an Bindemittel, eine optimale Bodenverbesserung oder Bodenstabilisierung erreicht, wird erfindungsgemäß vorgeschlagen, daß hinter der Dosiereinheit (6) eine rotierende Bodenmischeinrichtung (7) vorgesehen ist.

## Beschreibung

Die Erfindung betrifft ein Einstreumischfahrzeug zum staubfreien und dosierten Verteilen von Baustoffen, wie Kalk oder Zement, zur Erzielung einer Bodenverbesserung oder Bodenstabilisierung, mit einem Fahrwerk, welches aus Vorder- und Hinterachse besteht und welches einen Materialvorratsbehälter und eine Dosiereinheit zum Verteilen des Baustoffs oder Bindemittels trägt.

Aus dem Stand der Technik ist bekannt, daß mit Hilfe von gezogenen oder selbstfahrenden Streufahrzeugen oder aufgesattelten Streuern, mit einer zur Fahrgeschwindigkeit proportionalen Drehzahl der Dosiereinrichtung, Streugut auf der zu behandelnden Bodenoberfläche verteilt werden kann. Die Beschickung der Dosiereinrichtung erfolgt über das Schwerkraftprinzip mit Luftstrom-Unterstützung zur Erhöhung der Fließfähigkeit oder über ein Förderband. Der drehzahlgeregelte Antrieb der Dosiereinrichtung wird überwiegend hydraulisch mittels Verstellpumpen realisiert. Die Sollwertvorgabe der Streumengenregelung geschieht per Potentiometer von der Fahrerkabine aus. Über elektronische Zähler mit Anzeige wird die bearbeitete Fläche und ausgebrachte Streumenge dargestellt. Das Ladegewicht des Baustoffes wird mittels eines elektronischen Meßsystems ermittelt, angezeigt oder ausgedruckt.

Zur Vermeidung von zu großer Staubentwicklung werden Staubschutzschürzen aus Streifenelementen als Sonderausstattung angewendet. Nach dem Verteilen des Bindemittels wird der nächste Arbeitsgang - das Mischen - vorgenommen. Hierdurch soll eine Staubentwicklung bei Wind eingeschränkt werden.

Das verteilte Bindemittel wird beim Baumischverfahren (mixed-in-place) im allgemeinen mit Spezialfräsmaschinen in den Boden eingemischt. Je nach Bodenart und Wassergehalt ist die Anzahl der Mischdurchgänge die gefahren werden müssen, um eine homogene Mischung in gleichmäßiger Tiefe zu erreichen, festzulegen.

Nachteilig bei dieser Art von Bodenverbesserung oder Bodenstabilisierung im Baumischverfahren ist die sehr starke Staubentwicklung beim und nach dem Verteilen sowie beim Einfräsen des Bindemittels. Auch kann durch äußere Einflüsse wie Wind keine gleichmäßige Bindemittelverteilung gewährleistet werden.

Maschinentechnische Entwicklungen, welche diesen Nachteil beseitigen sollen, werden durch einen hier aufgezeigten Bodenstabilisator erreicht, der das Verteilen und Einfräsen (Mischen) in einen Arbeitsgang durchführt. Nachteilig bei dieser Maschinenkombination ist, daß ein teures kombiniertes Gerät, bestehend aus Streuer und Bodenfräse, benutzt werden muß, auch wenn Arbeiten in einzelne wiederholbaren Arbeitsschritten, wie nur Streuen oder mehrmaliges Mischen, durchzuführen ist.

Der Erfindung liegt die Aufgabe zugrunde, eine kostengünstige Maschine bereitzustellen, die umweltschonend, d.h. staubfrei und ressourcenschonend sowie mit einem Minimum an Bindemittel, eine optimale Bodenverbesserung oder Bodenstabilisierung erreicht.

Erfindungsgemäß gelingt die Lösung der Aufgabe mit einem Einstreumischfahrzeug der in Patentanspruch 1 angegebene Merkmale aufweist.
Vorteilhafte Ausgestaltungen der erfindungsgemäßen Maschine sind in den Unteransprüchen angegeben. Ein mit einem erfindungsgemäßen Einstreumischfahrzeug zum staubfreien und genauen dosierten Verteilen von Baustoffen wie Kalk oder Zement zur Erzielung einer optimalen Bodenverbesserung oder Bodenstabilisierung.

Die Staubfreiheit wird durch das Einmischen des verteilten Bindemittels an der Bodenoberfläche mit dem anstehenden Boden zeitgleich, d.h. direkt hinter der Dosiereinrichtung in einem vorzugsweise gekapselten Arbeitsraum erreicht. Der Antrieb der Arbeitseinrichtungen erfolgt vom Zugfahrzeug und/oder durch ein separat mitgeführtes Antriebsaggregat. Als weitere Einrichtung zur Staubreduzierung dient eine Staubabsaugeinrichtung, bestehend aus einem Gebläse und einem Abscheider, die mit den Arbeitsräumen der Dosiereinrichtung und des Mischers verbunden sind. Der durch die Absaugung entstehende geringfügige Druckunterschied in und außerhalb der Arbeitsräume sorgt für eine sehr effektive Staubreduzierung.

Die Erfindung wird im folgenden anhand eines Ausführungsbeispieles näher erläutert. In den zugehörigen Zeichnungen zeigen:
- **Figur 1**: Einstreumischanhänger mit hinter der Hinterachse angeordnetem Mischer,
- **Figur 2**: Einstreumischanhänger mit zwischen den Achsen angeordnetem Mischer und einer Tankeinrichtung für einen zweiten Baustoff,
- **Figur 3**: Einstreumischanhänger mit zwischen den Achsen angeordnetem Mischer und separatem Antriebsaggregat,
- **Figur 4**: Selbstfahrender Einstreumischanhänger, ausgeführt als Knicklenker mit Dosiereinrichtung und Mischer, die beide zwischen den Achsen angeordnet sind,
- **Figur 5**: Selbstfahrender Einstreumischanhänger, ausgeführt als Aufsattelfahrzeug mit Dosiereinrichtung und Mischer,
- **Figur 6**: Einstreumischeinrichtung, ausgeführt als Anbaugerät mit Vorratsbehälter, Dosiereinrichtung und Mischer,
- **Figur 7**: Einstreumischeinrichtung, ausgeführt als Anbaugerät mit Dosiereinrichtung und Mischer und separatem Vorratsbehälter.

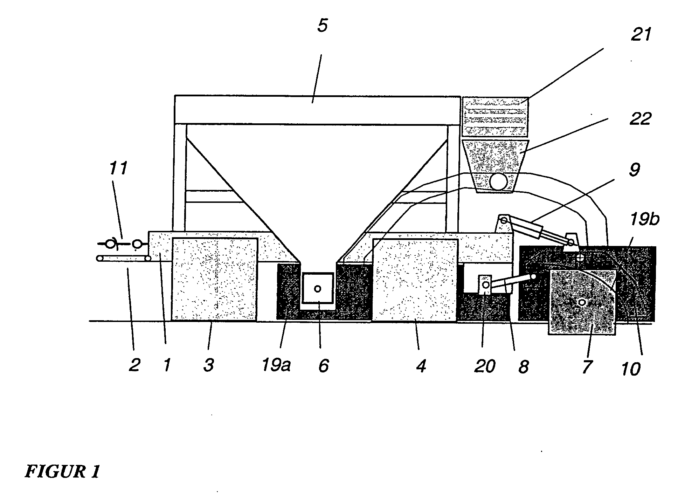

In **Figur 1** ist ein Einstreumischanhänger 1 dargestellt, der mit dem erfindungsgemäßen, zwischen der Vorder- und Hinterachse 3 und 4 angeordneten Bindemitteltank 5 mit einer Dosiereinrichtung 6 und hinter der Hinterachse an einem Unter- und Oberlenker 8 und 9 gekoppelten Mischeinrichtung 7 ausgerüstet ist. Selbstverständlich kann die Erfindung auch an einem Anhänger verwirklicht werden, der nur eine einzige Achse oder auch eine Doppelachse aufweist. Die Dosiereinheit ist zweckmäßigerweise vor der Hinterachse bzw. vor der einzigen Achse angeordnet, während die Mischeinrichtung, konkret eine Bodenfräse, entweder vor oder hinter einer solchen Achse angeordnet sein kann. Beide Arbeitsräume 19, die der Bindemittelverteilung 6 und der des Mischers 7, sind gekapselt und die Höhe des Arbeitsraumes 19 bzw. der Abdeckung ist verstellbar, ebenso wie auch die Dosiereinrichtung und die Mischeinrichtung individuell, d. h. unabhängig voneinander und auch unabhängig von der Abdeckung höhenverstellbar ausgeführt sind. Wahlweise können die genannten Elemente auch miteinander verbunden und gemeinsam höhenverstellbar und/oder um eine Achse verkippbar sein.

Dies Seitenteile der Abdeckung bestehen vorzugsweise aus harten, verschleißfesten Platten, zum Beispiel aus Stahl, die dafür vorgesehen sind, mit ihrer unteren Kante einige cm in den Boden einzudringen, um so einen vollständig dichten seitlichen Abschluß zum Boden zu gewährleisten. Nach vorn kann die Abdeckung durch eine flexible und im Gebrauch über den Boden schleifende oder dicht darüber hinweg streichende Gummi- oder Plastikbahn bzw. -schürze gebildet werden, die seitlich möglichst dicht an die Seitenplatten anschließt. Eine solche Gummi- oder Plastikbahn kann auch mehrteilig aus mehreren Streifen oder überlappenden Abschnitten ausgebildet sein, was zum Beispiel eine Einstellmöglichkeit in Breitenrichtung bietet. Nach hinten, d. h. hinter der Mischeinrichtung benötigt man keine Abdeckung mehr, wenn die Mischeinrichtung, wie z. B. eine Bodenfräse, keine großen Freiräume zu den Seitenwänden und der Oberseite der Abdeckung aufweist, da dann die Mischeinrichtung selbst die hintere Abdeckung bildet und hinter der Mischeinrichtung das potentiell staubende Material bereits in den Boden eingearbeitet ist. Ansonsten könnte eine hintere Abdekkung ebenso wie die vordere Abdeckung ausgebildet sein. Der Antrieb von Dosiereinheit, Mischer und verstellbaren Koppelelementen erfolgt mechanisch 11 und hydraulisch vom Trägerfahrzeug aus.

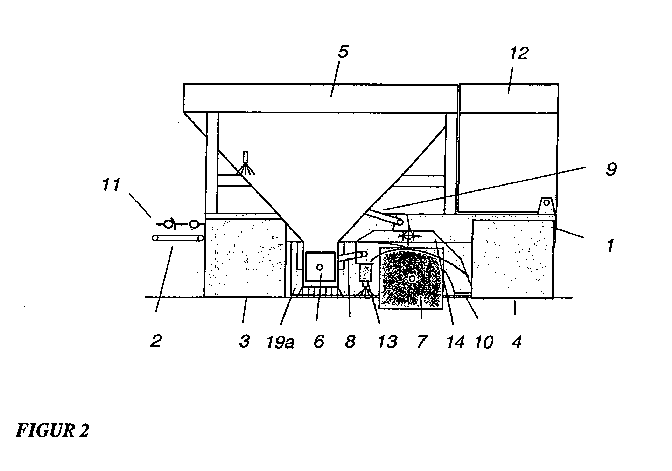

In **Figur 2** ist der Mischer 7 direkt hinter Dosiereinheit 6 zwischen Vorder- und Hinterachse 3 und 4 des Einstreumischanhängers höhenverstellbar 8 und 9 angeordnet. Je nach Bodenzustand ist es möglich über Einspritzdüsen Wasser oder Emulsion in die Arbeitsräume 13 und 14 in den Mischer zu induzieren. Der Tank 12 dient hierzu als Vorratsbehälter und ist als Aufsatzmodul konzipiert. Die Ausbringmengen vom Dosierer und der Einspritzdüse 13 und 14 werden in Abhängigkeit von der Arbeitsgeschwindigkeit des Einstreumischanhängers proportional geregelt. Über eine Fembedienung lassen sich die Sollwerte von Streumengen der Dosiereinheit 6 und die Einspritzmengen der Düsen 13 und 14 vorgegeben. Der Istwert der Ausbringmengen wird über eine Digitalanzeige dargestellt.

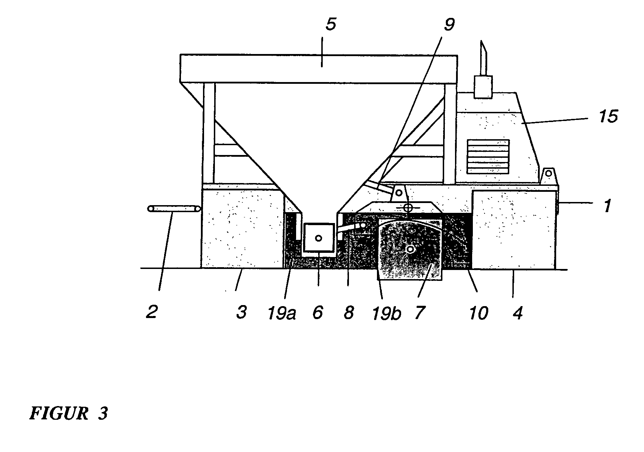

**Figur 3** zeigt einen Einstreumischanhänger mit integriertem Antriebsaggregat 15, daß mechanische, pneumatische, hydraulische oder elektrische Energie für den Antrieb der Dosiereinrichtung 6 für den Antrieb des Mischers 7 und dessen Hub- und Verstelleinrichtung bereitstellt. Zur Vermeidung einer Überlastung des Mischerantriebes ist die Hub- und Verstelleinrichtung des Mischers 7 mit einer Zugkraftregelung ausgerüstet. Dazu befindet sich an dem Unterlenker 8 eine Zugkraftmeßeinrichtung, die über einen Regler den Mischer über einen Unterlenker hebt oder senkt.

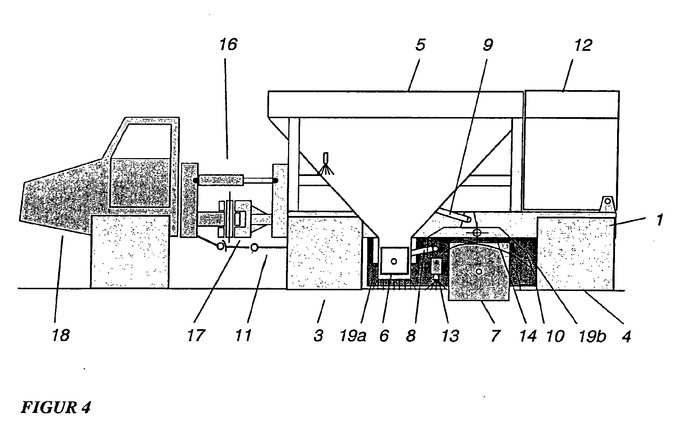

**Figur 4** erläutert eine Ausführungsform für das erfindungsgemäße selbstfahrende Einstreumischfahrzeug, das als Knicklenker 16 und 17 ausgeführt ist. Zur Erhöhung der Geländegängigkeit ist das Knickgelenk mit einem zusätzlichen Freiheitsgrad um die Fahrzeuglängsachse versehen. Vom Zugfahrzeug 18 werden alle Antriebsaktoren für Dosierer 6, Mischer 7 und Verstell- und Hubeinrichtung 8 und 9 mit mechanischer, pneumatischer, hydraulischer und/oder elektrischer Energie versorgt. Der Mischer 7 ist als Mit- oder Gegenlaufmischer konzipiert. Die Abdeckung des Mischraums 10 läßt sich je nach Betriebszustand, Bodenart und Zustand verkleinem oder vergrößern.

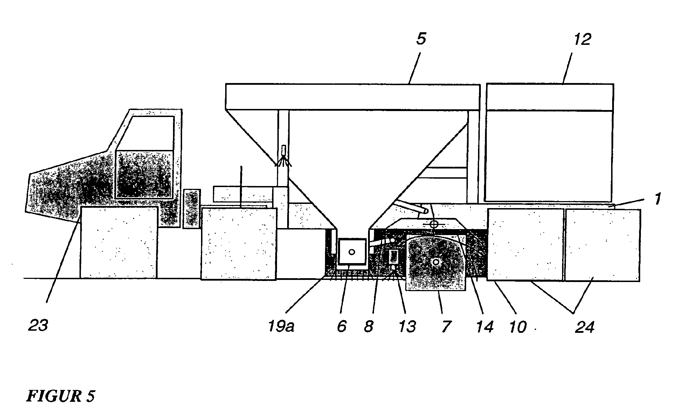

**Figur 5** erläutert eine Ausführungsform für das erfindungsgemäße selbstfahrende Einstreumischfahrzeug, das als Aufsattelfahrzeug 23 mit einfacher oder mehrfacher Hinterachse 24 ausgeführt ist.

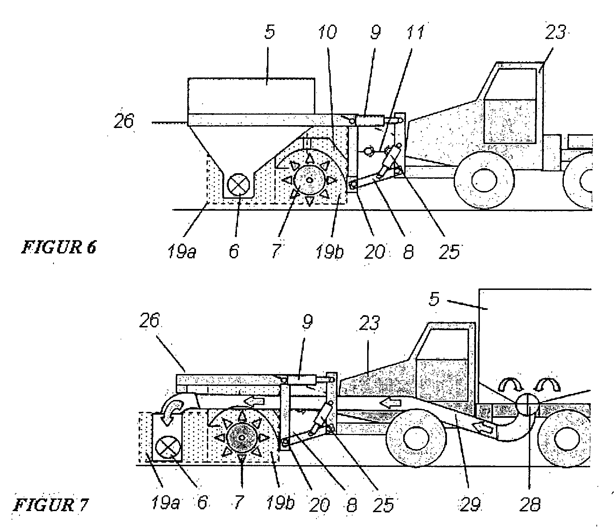

**Figur 6** erläutert eine Ausführungsform für die erfindungsgemäße Einstreumischeinrichtung, ausgeführt als Anbaugerät mit Vorratsbehälter 5, Dosiereinrichtung 6 und Mischer 7, die in einem Aufnahmerahmen 26 integriert sind und über eine verstellbare Dreipunktaufhängung, bestehend aus einem rechten und linken Unterlenker 8, einem Oberlenker 9 und einer Hubverstellung 25 trennbar am Fahrzeug 23 angeordnet sind.

**Figur 7** erläutert eine Ausführungsform für die erfindungsgemäße Einstreumischeinrichtung, ausgeführt als Anbaugerät mit einer Dosiereinrichtung 6 und Mischer 7, die in einem Aufnahmerahmen 26 integriert sind und über eine verstellbare Dreipunktaufhängung, bestehend aus einem rechten und linken Unterlenker 8, einem Oberlenker 9 und einer Hubverstellung 25 trennbar am Fahrzeug 23 angeordnet sind. Der Vorratsbehälter 5 zur Aufnahme des Streugutes, das über die Einfüllöffnung 27 gefüllt wird und mittels eines pneumatischen Förderers 28 über Förderleitungen 29 zur Dosiereinrichtung 6 transportiert wird, ist separat am Fahrzeug 23 angeordnet.

Der Einstreumischanhänger 1 hat ein Fahrwerk, bestehend aus Vorder- und Hinterachse 3 und 4, mit einem Materialvorratsbehälter 5, einer Dosiereinheit 6 zum Verteilen des Bindemittels, mit einer hinter der Hinterachse angeordneten rotierenden Bodenmischeinrichtung 7 die über Ober- und Unterlenker 8 und 9 höhenverstellbar am Anhänger 1 befestigt ist. Der Antrieb von Dosiereinheit, Mischer und verstellbaren Koppelelementen erfolgt mechanisch 11 und/oder hydraulisch vom Trägerfahrzeug aus.

In einer Ausführungsform ist der Mischer 7 direkt hinter der Dosiereinrichtung 6 zwischen der Vorder- und Hinterachse 3 und 4 über Ober- und Unterlenker 8 und 9 höhenverstellbar angeordnet. Der Mischer 7 ist als Mit- oder Gegenlaufmischer konzipiert. Die Abdeckung des Mischraums 10 läßt sich je nach Betriebszustand, Bodenart und -zustand verkleinern oder vergrößern. Zur Vermeidung einer Überlastung des Mischerantriebes ist die Hub- und Verstelleinrichtung des Mischers 7 mit einer Zugkraft- und Momentenregelung ausgerüstet. Dazu befindet sich an dem Unterlenker 8 eine Zugkraftmeßeinrichtung 20 und am Antrieb des Mischers eine Drehmomentenüberwachung die zusammen mit einem Regler den Mischer über die Unterlenker hebt oder senkt.

Beide Arbeitsräume, d.h. der des Streuraums zur Bindemittelverteilung 19a und der des Mischraums 19b, sind gekapselt, wobei die Höhe des Mischraums 19b zur Bearbeitungsebene verstellbar ausgeführt ist. Eine wahlweise vorzusehende Staubabsaugeinrichtung, bestehend aus Gebläse 21 und Abscheider, 22 unterstützt das staubfreie Arbeiten des Einstreumischanhängers.

Ein zweiter Aufnahmebehälter 12 zur Speicherung von Wasser oder einer Emulsion ist am Einstreumischanhänger angeordnet. Über Düsen wird die Substanz aus dem Tank 12 in den Arbeitsraum des Mischers 13 und 14 induziert.

Die Ausbringmengen vom Dosierer 6 und der Einspritzdüse 13 und 14 werden in Abhängigkeit von der Arbeitsgeschwindigkeit des Einstreumischanhängers proportional geregelt. Über eine Fernbedienung lassen sich die Sollwerte von Streumengen der Dosiereinheit 6 und die Einspritzmengen der Düsen 13 und 14 vorgegeben. Der Istwert der Ausbringmengen wird über eine Digitalanzeige dargestellt.

Der Einstreumischanhänger ist mit einem integrierten Antriebsaggregat 15 ausgestattet, das die benötigte mechanische, pneumatische, hydraulische und/oder elektrische Energie für den Antrieb der Dosiereinrichtung 6, 13 und 14, für den Antrieb des Mischers 7 und dessen Hub- und Verstelleinrichtung 8 und 9 sowie für die Staubabsaugeinrichtung 21 und 22 bereitstellt.

In einer besonderen Ausführungsform ist der Einstreumischanhänger als selbstfahrendes Einstreumischfahrzeug 18 konzipiert und als Knicklenker 16 und 17 ausgeführt. Zur Erhöhung der Geländegängigkeit ist das Knickgelenk mit einem zusätzlichen Freiheitsgrad um die Fahrzeuglängsachse versehen. Vom Zugfahrzeug 18 werden alle Antriebseinheiten für Dosierer 6, Mischer 7 und Verstellund Hubeinrichtung 8 und 9 sowie der Absaugeinrichtung 21 und 22 mit mechanischer, pneumatischer, hydraulischer und/oder elektrischer Energie versorgt.

Dabei kann der Einstreumischanhänger auch als selbstfahrendes Einstreumischfahrzeug als Aufsattelfahrzeug 23 mit einer einfachen oder mehrfachen Hinterachse 24 ausgebildet sein.

### BEZUGSZEICHENLISTE

- 1: Einstreumischanhänger
- 2: Schleppeinrichtung
- 3: Vorderachse
- 4: Hinterachse
- 5: Aufnahmetank
- 6: Dosiereinrichtung
- 7: Mischer
- 8: Unterlenker
- 9: Oberlenker
- 10: Abdeckung
- 11: Mechanischer Antrieb
- 12: Zweiter Aufnahmetank
- 13: Einspritzdüse im Fräsraum
- 14: Einspritzdüse im Mischraum
- 15: Antriebsaggregat
- 16: Lenkzylinder
- 17: Knickgelenk
- 18: Zugfahrzeug
- 19a: Gekapselter höhenverstellbarer Streuraum
- 19b: Gekapselter höhenverstellbarer Mischraum
- 20: Zugkraftmeßeinrichtung
- 21: Gebläse
- 22: Abscheider
- 23: Sattelfahrzeug
- 24: Mehrfach-Hinterachse
- 25: Hubzylinder der Unterlenker
- 26: Aufnahmerahmen
- 27: Einfüllöffnung
- 28: pneumatischer Förderer
- 29: Förderleitung

## Patentansprüche

1. Einstreumischfahrzeug zum Verteilen und gleichzeitigen Einmischen von Bindemitteln, wie z.B. Kalk oder Zement, zur Erzielung einer Bodenverbesserung oder Bodenstabilisierung, mit einem Fahrwerk (1), welches vorzugsweise eine Vorder- und eine Hinterachse (3, 4) aufweist, und mit einem Materialvorratsbehälter (5) sowie einer Dosiereinheit (6) zum Verteilen des Bindemittels, **dadurch gekennzeichnet, daß** hinter der Dosiereinheit (6) eine rotierende Bodenmischeinrichtung (7) vorgesehen ist.

2. Einstreumischfahrzeug nach Anspruch 1, **dadurch gekennzeichnet, daß** die Bodenmischeinrichtung über Ober- und Unterlenker (8, 9) höhenverstellbar am Mischfahrzeug befestigt ist.

3. Einstreumischfahrzeug nach Anspruch 1 und 2, **dadurch gekennzeichnet, daß** die Bodenmischeinrichtung (7) hinter der Hinterachse des Fahrwerks vorgesehen ist.

4. Einstreumischfahrzeug nach einem der Ansprüche 1 bis 3, **dadurch gekennzeichnet, daß** die Bodenmischeinrichtung (7) einen mit Ausnahme der Bodenseite und gegebenenfalls der Rückseite gekapselten Arbeitsraum aufweist.

5. Einstreumischfahrzeug nach Anspruch 4, **dadurch gekennzeichnet, daß** die Abdeckung bzw. Kapselung des Mischraums (10) in ihrer Größe verstellbar ist.

6. Einstreumischfahrzeug nach einem der Ansprüche 1 bis 5, **dadurch gekennzeichnet, daß** der Mischer (7) direkt hinter der Dosiereinrichtung (6) zwischen der Vorder- und der Hinterachse (3, 4) angeordnet ist.

7. Einstreumischfahrzeug nach einem der Ansprüche 1 bis 6, **dadurch gekennzeichnet, daß** der Mischer (7) als Mit- oder Gegenlaufmischer ausgebildet ist.

8. Einstreumischfahrzeug nach einem der Ansprüche 1 bis 7, **dadurch gekennzeichnet, daß** die Hub- und Verstelleinrichtung des Mischers (7) mit einer Zugkraft- und Momentenregelung zur Vermeidung einer Überlastung des Mischantriebes ausgerüstet ist.

9. Einstreumischfahrzeug nach Anspruch 8, **dadurch gekennzeichnet, daß** am Unterlenker (8) eine Zugkraftmeßeinrichtung (20) und am Antrieb des Mischers (7) eine Drehmomentenüberwachung vorgesehen ist, die zusammen mit einem Regler den Mischer (7) über die Unterlenker hebt oder senkt.

10. Einstreumischfahrzeug nach einem der Ansprüche 1 bis 9, **dadurch gekennzeichnet, daß** zusätzlich auch der Arbeitsraum der Dosiereinheit (6) mit Ausnahme der Bodenseite und gegebenenfalls auch der Rückseite abgekapselt ist.

11. Einstreumischfahrzeug nach Anspruch 10 oder einem der auf die Ansprüche 4 oder 5 rückbezogenen Ansprüche, **dadurch gekennzeichnet, daß** die Abdeckung bzw. Kapselung aus einer mehrteiligen Staubschutzschürze besteht.

12. Einstreumischfahrzeug nach Anspruch 11 daß die mehrteilige Staubschürze zwei harte Seitenplatten, vorzugsweise aus Metall sowie eine flexible Frontseite, z. B. aus Gummi oder Kunststoff aufweist.

13. Einstreumischfahrzeug nach einem der Ansprüche 10 bis 12, **dadurch gekennzeichnet, daß** mindestens die Seitenteile der Abdeckung höhenverstellbar sind.

14. Einstreumischfahrzeug nach einem der Ansprüche 10 bis 13, **dadurch gekennzeichnet, daß** mindestens der gekapselte Arbeitsraum der Dosiereinrichtung (6) eine Staubabsaugeinrichtung aufweist.

15. Einstreumischfahrzeug nach einem der Ansprüche 1 bis 14, **dadurch gekennzeichnet, daß** ein zweiter Aufnahmebehälter (12) zur Speicherung von Wasser oder einer Emulsion am Einstreumischfahrzeug vorgesehen ist, von welchem aus das Wasser oder die Emulsion in den Arbeitsraum des Mischers und/oder der Dosiereinheit injiziert wird.

16. Einstreumischfahrzeug nach einem der Ansprüche 1 bis 15, **dadurch gekennzeichnet, daß** es ein integriertes Antriebsaggregat (15) aufweist, welches die benötigte mechanische, pneumatische, hydraulische und/oder elektrische Energie für den Antrieb der Dosiereinrichtung (6), des Mischers (7) und der Hub- und Verstelleinrichtung sowie gegebenenfalls der Staubabsaugeinrichtung (21) bereitstellt.

17. Einstreumischfahrzeug nach einem der Ansprüche 1 bis 16, **dadurch gekennzeichnet, daß** es als Anhänger ausgebildet ist.

18. Einstreumischfahrzeug nach einem der Ansprüche 1 bis 16, **dadurch gekennzeichnet, daß** das Einstreumischfahrzeug als selbstfahrendes Fahrzeug ausgestaltet ist.

19. Einstreumischfahrzeug nach Anspruch 17 oder 18, **dadurch gekennzeichnet, daß** es als Knicklenker ausgebildet ist.

20. Einstreumischfahrzeug nach Anspruch 19, **dadurch gekennzeichnet, daß** die beiden Schenkel des Knicklenkers relativ zueinander um ihre Längsachse drehbar sind.

21. Einstreumischfahrzeug nach einem der Ansprüche 11 bis 16, **dadurch gekennzeichnet, daß** das Fahrzeug als Aufsattelfahrzeug (23) mit einer einfachen oder mehrfachen Hinterachse (24) ausgebildet ist.

22. Einstreumischeinrichtung nach mindestens einem der vorhergehenden Ansprüche, **dadurch gekennzeichnet, daß** die Einstreumischeinrichtung als Anbau- oder Aufsattelgerät mit Vorratsbehälter (5), Dosiereinrichtung (6) und Mischer (7), die in einem Aufnahmerahmen (26) integriert sind und über eine verstellbare Dreipunktaufhängung, bestehend aus einem rechten und linken Unterlenker (8), einem Oberlenker (9) und einer Hubverstellung (25) trennbar als Front- oder Heckgerät oder seitlich sowie auch mittig am Fahrzeug (23) angeordnet ist.

23. Einstreumischeinrichtung nach mindestens einem der vorhergehenden Ansprüche, **dadurch gekennzeichnet, daß** die Einstreumischeinrichtung mit einem Vorratsbehälter (5) zur Aufnahme des Streugutes, das über die Einfüllöffnung (27) gefüllt oder als Container ausgeführt ist und mittels eines Förderers (28) über Förderleitungen (29) zur Dosiereinrichtung (6) transportiert wird, separat am Fahrzeug (23) angeordnet ist oder als Anhänge- oder Aufsattelgerät mitgeführt wird.
